# EUROPÄISCHE PATENTSCHRIFT

(11) **EP 1 734 345 B1**
(45) Veröffentlichungstag und Bekanntmachung des Hinweises auf die Patenterteilung: **21.12.2011**
(21) Anmeldenummer: 06006642.0
(22) Anmeldetag: 30.03.2006
(51) Int. Cl.: G01F 1/075

(54) **Messsystem zur Störungserkennung der Rotationsbewegung einer Vorrichtung, wobei die Vorrichtung mindestens einen rotierenden Permanentmagneten aufweist**
Measurement system for detecting faults in the rotary motion of a device where the device shows at least one rotating permanent magnet
Système de mesure destiné à la détection de la perturbation du mouvement de rotation d'un dispositif, par lequel est pourvu d'au moins un aimant permanent rotatif

(30) Priorität: 09.04.2005 DE 102005016374
(43) Veröffentlichungstag der Anmeldung: 20.12.2006
(73) Patentinhaber: Sensitec GmbH, 36633 Lahnau (DE)
(72) Erfinder: Loreit, Uwe Dipl.-Phys., 35580 Wetzlar (DE); Ketelsen, Jörn-Ove, 37139 Adelebsen (DE)
(74) Vertreter: Walther, Walther & Hinz GbR

(56) Entgegenhaltungen:
- WO-A-97/16705
- DE-A1- 19 620 007
- DE-U1- 20 001 227

## Beschreibung

Die Erfindung betrifft ein Messsystem zur Störungserkennung der Rotationsbewegung einer Vorrichtung, wobei die Vorrichtung mindestens einen rotierenden Permanentmagneten aufweist sowie einen ersten und einen zweiten zur Rotationsachse des Magneten versetzten sowie zur Rotationsachse winkelversetzt angeordneten Magnetfeldsensor zur Erfassung der Drehbewegung des Magneten und zur Erzeugung von mindestens zwei phasenversetzten Sensorsignalen, wobei eine Störungserkennungseinrichtung mit einer Auswerteschaltung zur Erfassung einer äußeren magnetischen Störung vorhanden ist.

Gegenstand der DE 196 20 007A1 ist ein Durchlaufmengenmesser mit einem proportional zur Durchlaufmenge beweglichen Turbinenrad. Das Turbinenrad besitzt auf seinem Flügel einen Dauermagneten als Impulsgeber für ein Steuerelement. Um zu verhindern, dass durch magnetische Fremdfelder die Anzeigegenauigkeit beeinträchtigt wird, wird nach der Lehre dieser Literaturstelle vorgeschlagen, dem Messsystem des Durchflussmengenmessers ein weiteres magnetfeldempfindliches, elektrisches Steuerelement zuzuordnen, das derart relativ zu dem Dauermagneten des Turbinenrades aufgeordnet ist, dass es von diesem Dauermagneten nicht beeinflusst wird, aber durch ein überlagertes magnetisches Fremdfeld beeinflusst werden kann.

Das DE 200 01 227 U1 beschreibt einen Indikator zur Feststellung äußerer Magnetfelder. Ein solcher Indikator stellt sich als magnetfetdsensibel , sichtbar codierte Folie dar, deren Anzeige durch äußere Magnetfelder beeinflusst wird.

Aus der DE 195 38 163 ist bekannt, zur Drehzahl- und Drehrichtungserkennung mehrere Magnetfeldsensoren einzusetzen, die in einem sich drehenden Magnetfeld in Umfangsrichtung hintereinander angeordnet sind und von welchen Sensorsignale zur Auswertung in einer Rechnereinheit abgenommen und ausgewertet werden. Hierbei werden vier redundante phasenverschobene Messsignale erzeugt, welche an die Rechnereinheit zur Drehrichtungs- und Drehzahlerkennung übergeben werden. Bei dieser Lösung werden sogenannte MR-Sensoren als Wheatstone'sche Brücken eingesetzt.

In der WO 98/49527 A1 werden bei einer Messvorrichtung für einen Benzindurchfluss zwei phasenversetzte Sensorsignale von Magnetfeldsensoren eingesetzt.

Die DE 39 36 712 A1 beschreibt ein Durchflussmessgerät mit einer speziellen Kodierung für eine Verbindung zwischen einem Sender und einem Empfänger.

Die EP 0 928 970 A1 beschreibt ein Taxameter, das vor Manipulation geschützt werden soll. Es werden zwar Hallsensoren eingesetzt, vorhanden ist jedoch ein Synchronisationssignal S1 und ein weiteres taktartiges Signal S2.

Der Durchflussmesser nach der DD 294 085 A5 nutzt zwei Magnetfeldsensoren. Dieser Schrift liegt das Problem zu Grunde, durch Überlagerung von stärkeren Magnetfeldern die Messung dadurch zu manipulieren, dass die Magnetflusswechsel vom Wandlergeber ausgelöscht und/oder die Bewegung gebremst wird. Hierbei ist im Einzelnen vorgesehen, dass der zweite Sensor als Reedkontakt ausgeführt ist und unempfindlich gegen den Magnetflusswechsel des Wandlergebers ist. Dadurch ist aber eine Erfassung der Drehrichtung nicht mehr möglich.

Aus der WO 97/16705 ist eine Strömungserkennungseinrichtung mit einer Auswerteschaltung zur Erfassung einer äußeren magnetischen Störung bekannt. Hierbei ist ein dritter Sensor in Form eines Hall-Sensors vorgesehen, um ein internes Signal zu erzeugen, das durch den Mikroprozessor zur Messung von fehlerhaften Impulsen und fehlerhaften Bit-Mustern dient. Der elektrische Phasenversatz zwischen dem ersten und dem zweiten Sensorsignal ist hierbei immer gleich.

Bei Verbrauchszählern, die mit rotierenden Magneten arbeiten, insbesondere bei derart aufgebauten Wasserzählern besteht das Problem, dass sie manipulierbar sind, und zwar mit einem starken Magneten. Durch den Magneten, der von außen an den Wasserzähler angelegt wird, wird ein Turbinen- oder Schaufelrad des Zählers, das die eingebauten Magnete trägt, abgebremst oder sogar völlig blockiert. Dadurch arbeitet der Wasserzähler unkorrekt und misst einen niedrigeren oder gar keinen Verbrauch.

Der Erfindung liegt die Aufgabe zugrunde, ein solches Messsystem so weiterzubilden, dass eine derartige Manipulation unmittelbar oder auch nachträglich festgestellt werden kann.

Diese Aufgabe wird durch die kennzeichnenden Merkmale des Anspruches 1 in Verbindung mit den Merkmalen des Oberbegriffs gelöst.

Die Erfindung beruht auf der Erkenntnis, dass ein zusätzliches, äußeres Magnetfeld den Phasenversatz verändert. Das äußere Magnetfeld wird nämlich mit dem Magnetfeld der eingebauten Magnete überlagert, wodurch sich der Signalverlauf der Magnetfeldsensoren verändert.

Durch die erfindungsgemäße Störungserkennungseinrichtung mit einer Auswerteschaltung, die den Phasenversatz der Sensorsignale überwacht, ist es möglich, die magnetischen Störungen und somit eine Manipulation festzustellen.

Weitere vorteilhafte Merkmale sind den Unteransprüchen zu entnehmen.

In einer vorteilhaften Weiterbildung des erfindungsgemäßen Systems ist vorgesehen, dass die Auswerteschaltung derart ausgebildet ist, dass sie einen Zeitpunkt und/oder eine Zeitdauer der magnetischen Störung speichert. Dadurch kann eine Manipulation zweifelsfrei nachgewiesen werden und sogar eine Aussage über den Umfang der Manipulation getroffen werden.

Zweckmäßigerweise umfasst das System auch eine Drehrichtungserfassungsschaltung, die derart ausgebildet ist, dass sie aus der Phasenlage von zwei Sensorsignalen eines Sensors, insbesondere von Sinus und Kosinussignalen des Sensors, eine Drehrichtung des Messrades bzw. des Permanentmagneten des Messrades feststellt, um zu ermitteln, ob der Permanentmagnet vorwärts oder rückwärts läuft.

Eine genaue Messung des zu ermittelnden Phasenversatzes ergibt sich, wenn die Störungserkennungseinrichtung und/oder die Drehrichtungserfassungsschaltung so ausgebildet sind, dass die Phasenlage anhand der Nulldurchgänge der Sensorsignale bestimmt wird. Die Nulldurchgänge lassen sich in einfacher Weise durch Komparatoren sehr genau feststellen und die entsprechenden Signalverläufe leicht digitalisieren.

Günstig ist es, wenn jeder Magnetfeldsensor mindestens ein Sensorpaar umfasst, so dass jeweils ein Sinussignal und ein Kosinussignal von jedem Magnetfeldsensor erzeugt wird. Dadurch ist eine Ermittlung der Drehrichtung des Permanentmagneten möglich, selbst wenn einer der Magnetfeldsensoren defekt sein sollte.

Von Vorteil ist es, wenn die Magnetfeldsensoren als magnetoresistive Winkelsensoren oder als Hallsensoren ausgebildet sind. Diese sind sehr messempfindlich und können jede Magnetfeldveränderung durch Manipulationsversuch zuverlässig erfassen.

Eine einfache sowie wirkungsvolle Maßnahme zur Störungserkennung ergibt sich bei 2-poliger Magnetanordnung und MR-Sensoren, wenn eine kreisbogenförmige Anordnung der Magnetfeldsensoren unter einem Winkel von 90° gegeben ist. In diesem Fall sind deren Signale jeweils genau entgegengesetzt (d. h. um 180 ° verschoben), so dass eine Manipulation einfach zu erkennen ist.

Alternativ kann aber auch eine Magnetanordnung mit mehreren Permanentmagneten und mit mehr als zwei Polen im 360° Winkel vorhanden sein. Es können vierpolige, sechspolige, achtpolige (usw.) Anordnungen gebildet werden. Auch eine dreipolige Anordnung ist grundsätzlich möglich, wenn z.B. drei um 120 ° versetzte Magnete so angeordnet sind, dass z.B. ihre Nordpole nach außen zeigen während ihre Südpole nach innen gerichtet sind oder umgekehrt. Dies kann auch mit mehr als drei Magneten geschehen.

Eine weiter bevorzugte Maßnahme zeichnet sich dadurch aus, dass die Auswerteschaltung einen Microcontroller mit einer Software enthält, die eine Signalauswertung beider Magnetfeldsensoren durchführt. Die Softwarelösung zeichnet sich durch ein hohes Maß an Flexibilität aus und ist kostengünstig umzusetzen.

Besonders günstig ist eine Ausbildung derart, dass die Messung der Durchflussmenge auch noch bei Ausfall eines der beiden Sensoren gegeben ist, wobei ein Ausgangssignal des intakten, anderen Sensors, welches proportional der Umdrehungen ist, zur Messung der Umdrehungen herangezogen wird. Dadurch ist eine Ermittlung der Drehzahl oder Umdrehungen auch bei teilweise defektem Messsystem möglich.

Außerordentlich zuverlässig arbeitet das Messsystem, wenn zwei für beide Magnetfeldsensoren unabhängige Zähler zur Messung der Messradumdrehungen vorhanden sind, so dass, wenn die Zähler unterschiedliche Werte anzeigen, erkennbar ist, dass einer der beiden Zähler defekt ist. Ein Defekt lässt sich einfach feststellen, und der Zähler kann ausgetauscht werden, bevor er völlig defekt wird.

Eine Montage des erfindungsgemäßen Systems wird erheblich vereinfacht, wenn Mittel zur drahtlosen Übertragung der Umdrehungsanzahl und/oder einer Meldung der magnetischen Störung zu einer Mess- und/oder Auswerteeinheit vorhanden sind. Diese Einheit kann dann an beliebiger Stelle montiert werden bzw. leicht zur Wandmontage vorgesehen sein. Die fehlenden Signalübertragungskabel verringern außerdem die Manipulationsgefahr. Eine Beeinflussung bzw. Manipulation durch Anzapfen von Kabeln wird insofern wirkungsvoll verhindert.

Die Erfindung sowie weitere Vorteile derselben werden anhand der Figurenbeschreibung beispielhaft erläutert.

Es zeigt:
- Fig. 1: eine Ausführungsform des erfindungsgemäßen Messsystems;
- Fig. 2: eine Anordnung von MR-Sensoren im Winkel von 90 °;
- Fig. 3: einen Signalverlauf eines unmanipulierten Magnetfeldsensorsystems nach Fig. 2;
- Fig. 4: einen Signalverlauf eines manipulierten Magnetfeldsensorsystems nach Fig. 2;
- Fig. 5: zeigt einen Signalverlauf gemäß Fig. 3 in einer digitalisierten Form.

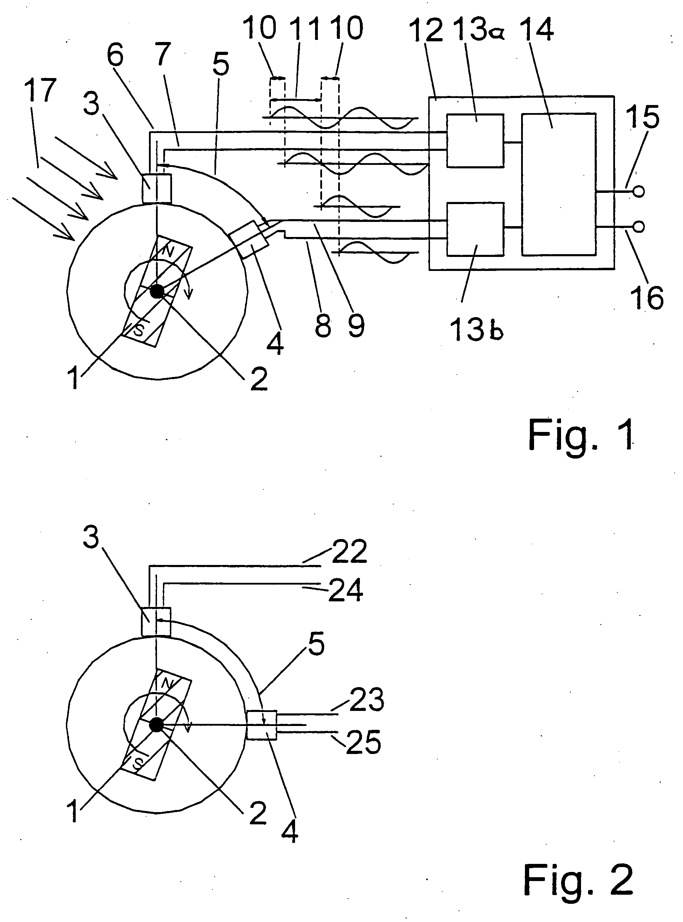

Fig. 1 zeigt ein Messsystem. Dieses umfasst einen Permanentmagneten 1, insbesondere einen stabförmigen oder zumindest länglichen Magneten, der symmetrisch an einer Rotationsachse 2 gelagert ist und sich zusammen mit dem Messrad (nicht gezeigt) dreht. Das Messrad und der Magnet 1 drehen sich proportional, beispielsweise zur Wasserdurchflussmenge.

Der Zähler ist mit zwei parallel zur Rotationsachse 2 des Permanentmagneten versetzten sowie zur Rotationsachse 2 winkelversetzt angeordneten Magnetfeldsensoren 3 und 4 zur Erfassung der Drehbewegung des Permanentmagneten und zur Erzeugung von zwei phasenversetzten Sensorsignalen versehen. Der Winkelversatz wird mit dem Bezugszeichen 5 veranschaulicht.

Der Magnet 1 erzeugt durch seine Drehung ein magnetisches Drehfeld, das von den Sensoren 3 und 4 erfasst wird.

Die Sensoren 3 und 4 geben in Abhängigkeit der Magnetstellung ein sich änderndes Signal. Vorzugsweise sind die Sensoren 3 und 4 winkelversetzt, so dass ein periodisches und ein zwischen Sensor 3 und 4 phasenversetztes Signal entsteht.

Das Bezugszeichen 10 in Fig. 1 veranschaulicht den Phasenversatz zwischen einem Sinus- und Kosinussensor eines Magnetfeldsensors 3 bzw. 4. Bezugszeichen 11 veranschaulicht einen Phasenversatz zwischen den beiden Sinussensoren.

Erfindungsgemäß ist eine Störungserkennungseinrichtung 12 mit einer Auswerteschaltung 14, die den Phasenversatz der Sensorsignale zur Erfassung einer magnetischen Störung 17 überwacht, vorgesehen.

Die Sensoren 3 und 4, die vorzugsweise als magnetoresistive Winkelsensoren bzw. als Hallsensoren ausgebildet sind, werden durch Leitungen 6, 7 und 8, 9 mit der Störungserkennungseinrichtung 12 verbunden.

Vorzugsweise besitzt jeder Sensor 3, 4 mindestens ein Sensorelementenpaar. Jedes Paar erzeugt wiederum zwei jeweils um 90° versetzte Signale, wie Fig. 1 veranschaulicht, die über die Leitung 6, 7 bzw. 8, 9 übertragen werden. Jeder Sensor 3, 4 erzeugt also ein Sinussignal und ein Kosinussignal. Durch diesen Phasenversatz ist es möglich, eine Drehrichtung und eine Durchflussmenge festzustellen, selbst wenn einer der Sensoren 3, 4 defekt sein sollte.

Jeder Magnetfeldsensor 3, 4 weist also einen Sinussensor (Sensorelement) und einen Kosinussensor auf. Von einer Störung ist beispielsweise dann auszugehen, wenn die Phasenbeziehung zwischen dem Sinussensor des ersten Magnetfeldsensors 3 und dem Sinussensor des zweiten Magnetfeldsensors 4 gleich ist oder allgemein vom Phasenversatz 11 des ungestörten Falls abweicht. Gleiches gilt für den Kosinussensor der beiden Magnetfeldsensoren.

Auch kann jeder Sensor 3, 4 zwei Vollbrücken mit jeweils vier Sensorelementen umfassen (Wheatstone'sche Brücke).

Die Signalleitungen 6, 7 des ersten Sensors 3 sind mit einer ersten Komparatorschaltung 13a (Komparator) verbunden, während die Signalleitung 8, 9 des zweiten Sensors 4 mit einer zweiten Komparatorschaltung 13b (Komparator) verbunden sind, um einerseits einen Nulldurchgang zu erfassen, welcher einer ansteigenden oder abfallenden Impulsflanke eines Rechtecksignals entspricht und um andererseits digitale Signale aus den versetzten Signalen bzw. den sinus- bzw. kosinusförmigen Signalen zu schaffen. Die Komparatoren sind mit einer Auswerteeinheit 14 verbunden, die erfindungsgemäß den Phasenversatz der Sensorsignale überwacht. Daher ist die Störungserkennungseinrichtung 12 so ausgebildet, dass sie die vier Phasenlagen der Sensorsignale überwacht.

Die Auswerteschaltung 14 ist vorzugsweise derart ausgebildet, dass sie einen Zeitpunkt und/oder eine Zeitdauer der magnetischen Störung 17, vorzugsweise in einen RAM-Speicher (Schreib-Lese-Speicher) oder in einem nichtflüchtigen Speicher (z. B. EEPROM) speichert. Außerdem enthält sie einen Microcontroller mit einer zum Beispiel in einem ROM-Speicher (Nur-Lese-Speicher) gespeicherten Software, die eine Signalauswertung beider Magnetfeldsensoren durchführt.

Insbesondere wird eine Messung der Drehzahl des Permanentmagneten bzw. des Messrades auch noch bei Ausfall eines der beiden Sensoren durchgeführt, wobei ein Ausgangssignal des intakten, anderen Sensors 3 bzw. 4, welches proportional zu den Umdrehungen ist, zur Messung der Durchflussmenge herangezogen wird. Hierbei sind für beide Magnetfeldsensoren 3 und 4 unabhängige Zähler zur Messung der Umdrehungen des Permanentmagneten in der Auswerteeinheit 14 vorhanden, so dass, wenn die Zähler unterschiedliche Werte anzeigen, erkennbar ist, dass einer der beiden Zähler defekt ist.

Die Störungserkennungseinrichtung 12 hat eine Schnittstelle (beispielhaft durch Leitungen 15, 16 symbolhaft veranschaulicht), damit Daten ausgelesen werden können und damit ggf. eine Manipulation (Störung 17) nachgewiesen werden kann.

Diese Störung 17 merkt sich die Vorrichtung mit der Folge, dass dann wenn der Zähler ausgelesen wird, unmittelbar erkannt wird, dass eine Störung vorgelegen hat.

Wenn die Magnetkraft von außen nicht ausreicht, um den sich drehenden Magneten anzuhalten, kann es passieren, dass der Magnet sich noch dreht, aber langsamer mit der Folge, dass zwar weiterhin ein Phasenversatz vorhanden ist, aber in abweichenden Maße als normal. Die Anordnung soll aber auch solche Abweichungen von einem vorgegebenen Phasenversatz als Störung registrieren.

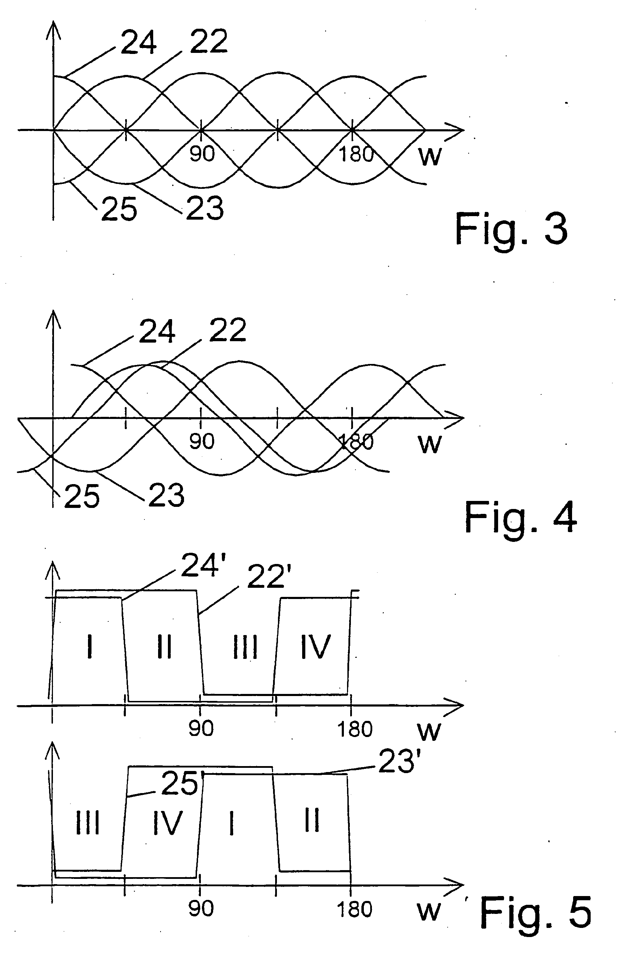

Die kreisbogenförmige Anordnung der magnetoresistiven Magnetfeldsensoren gemäß Fig. 2 unter einem Winkel von 90 ° verursacht, dass ein Sinussignal 22 und ein um 180 ° verschobenes Sinussignal 23 als Ausgangssignal vorhanden sind, wenn keine Störung 17 vorhanden ist, wie dies in Fig. 3 veranschaulicht ist.

Weiterhin ist eine Drehrichtungserfassungsschaltung möglich; aus Fig. 3 ist der Signalverlauf von Sensor 3 und Sensor 4 erkennbar. Jeder Sensor liefert hierbei die Signale 22 und 24 mm als Sinus- und Kosinussignal, aus welchen die Drehrichtung des drehenden Magneten ermittelt werden kann.

Geht z. B. das Signal 22 vor, d. h. es erreicht sein Maximum vor dem Signal 24, dann zeigt dies eine Drehrichtung an. Die andere Drehrichtung wird angezeigt, wenn das Signal 24 zu dem Signal 22 vorgeht. Gleiches gilt für die Signale 23, 25 des anderen Sensors.

In diesem Zusammenhang wird alternativ auf die korrespondierende digitalisierte Form des Signalverlaufs verwiesen. Die korrespondierende Sinus- und Kosinussignale sind mit 22', 24' und 23', 25' bezeichnet. Die Phaseninformation wird hierbei auf vier Zustände I, II, III, IV reduziert. So kann z. B. die Drehrichtung aus der zeitlichen Abfolge der Zustände I bis IV ermittelt werden.

Alternativ ist eine nicht gezeigte Magnetanordnung mit mehreren Permanentmagneten und mit mehr als zwei Polen im 360° Winkel möglich. Hierbei ist eine kreisbogenförmige, gleichmäßig am Kreisumfang verteilte Magnetanordnung zu bevorzugen.

Ferner können Mittel zur drahtlosen Übertragung der Umdrehungsanzahl und/oder einer Meldung der magnetischen Störung zu einer Mess- und/oder Auswerteinheit vorhanden sein.

### Bezugszeichenliste

- 1: Permanentmagnet
- 2: Rotationsachse
- 3, 4: Magnetfeldsensoren
- 5: Winkelversatz
- 6 - 9: Leitungen
- 10: Phasenversatz zwischen sin- und cos-Signal eines Sensors
- 11: Phasenversatz zwischen zwei Sensoren
- 12: Störungserkennungseinrichtung
- 13a: erste Komparatorschaltung
- 13b: zweite Komparatorschaltung
- 14: Auswerteschaltung
- 17: magnetische Störung
- 22, 24: sin-Signal
- 23, 25: cos-Signal
- 22', 24': sin-Signal nach Komparatorschaltung
- 23', 25': cos-Signal nach Komparatorschaltung

## Patentansprüche

1. Messsystem zur Störungserkennung der Rotationsbewegung einer Vorrichtung, wobei die Vorrichtung mindestens einen rotierenden Permanentmagneten (1) aufweist, sowie einen ersten und einen zweiten zur Rotationsachse (2) des Magneten versetzten sowie zur Rotationsachse (2) winkelversetzt angeordneten Magnetfeldsensor (3, 4) zur Erfassung der Drehbewegung des Magneten (1) und zur Erzeugung von mindestens zwei phasenversetzten Sensorsignalen, wobei eine Störungserkennungseinrichtung (12) mit einer Auswerteschaltung (14) zur Erfassung einer äußeren magnetischen Störung (17) vorhanden ist,
**dadurch gekennzeichnet,**
**dass** die Auswerteschaltung (14) die Veränderung des elektrischen Phasenversatzes der Sensorsignale des ersten und zweiten Magnetfeldsensors (3, 4) zur Erfassung der äußeren magnetischen Störung (17) überwacht.

2. Messsystem nach Anspruch 1,
**dadurch gekennzeichnet,**
**dass** die Auswerteschaltung (14) derart ausgebildet ist, dass sie einen Zeitpunkt und/oder eine Zeitdauer der magnetischen Störung (17) speichert.

3. Messsystem nach Anspruch 1 oder 2,
**gekennzeichnet durch**
eine Drehrichtungserfassungsschaltung, die derart ausgebildet ist, dass sie aus der Phasenlage von zwei Sensorsignalen die Drehrichtung des Permanentmagneten (1) feststellt, um zu ermitteln, ob der Permanentmagnet (1) vorwärts oder rückwärts läuft.

4. Messsystem nach einem der vorhergehenden Ansprüche,
**dadurch gekennzeichnet,**
**dass** jeder Magnetfeldsensor (3, 4) mindestens ein Sensorpaar umfasst, so dass jeweils ein Sinussignal (22, 23) und ein Kosinussignal (24, 25) von jedem Magnetfeldsensor (3, 4) erzeugt wird.

5. Messsystem nach einem der vorhergehenden Ansprüche,
**dadurch gekennzeichnet,**
**dass** jeder Magnetfeldsensor (3, 4) als Vollbrücke ausgebildet ist.

6. Messsystem nach einem der vorhergehenden Ansprüche,
**dadurch gekennzeichnet,**
**dass** die Störungserkennungseinrichtung (12) und/oder die Drehrichtungserfassungsschaltung so ausgebildet sind, dass eine Phasenlage an Nulldurchgängen der Sensorsignale bestimmt wird.

7. Messsystem nach einem der vorhergehenden Ansprüche,
**dadurch gekennzeichnet,**
**dass** die Magnetfeldsensoren (3, 4) als magnetoresistive Winkelsensoren ausgebildet sind.

8. Messsystem nach einem der vorhergehenden Ansprüche,
**dadurch gekennzeichnet,**
**dass** die Magnetfeldsensoren (3, 4) als Hallsensoren ausgebildet sind oder Hallsensoren umfassen.

9. Messsystem nach einem der vorhergehenden Ansprüche,
**gekennzeichnet durch**
eine zweipolige Magnetanordnung.

10. Messsystem nach Anspruch 9,
**gekennzeichnet durch**
eine kreisbogenförmige Anordnung der Magnetfeldsensoren (3, 4) unter einem Winkel von 90 **°.**

11. Messsystem nach einem der Ansprüche 1 bis 8,
**gekennzeichnet durch**
eine Magnetanordnung mit mehreren Permanentmagneten und mit mehr als zwei Polen im 360° Winkel.

12. Messsystem nach Anspruch 11,
**gekennzeichnet durch**
eine kreisbogenförmige, gleichmäßig am Kreisumfang verteilte Magnetanordnung.

13. Messsystem nach einem der vorhergehenden Ansprüche,
**dadurch gekennzeichnet,**
**dass** die Auswerteschaltung (14) einen Microcontroller mit einer Software enthält, die eine Signalauswertung beider Magnetfeldsensoren (3, 4) durchführt.

14. Messsystem nach einem der vorhergehenden Ansprüche,
**gekennzeichnet durch**
eine Ausbildung derart, dass die Messung der Drehzahl auch noch bei Ausfall eines der beiden Sensoren (3, 4) gegeben ist, wobei ein Ausgangssignal des intakten, anderen Sensors, welches proportional zu den Umdrehungen ist, zur Messung der Drehzahl, herangezogen wird.

15. Messsystem nach einem der vorhergehenden Ansprüche,
**dadurch gekennzeichnet,**
**dass** zwei für beide Magnetfeldsensoren (3, 4) unabhängige Zähler zur Messung der Messradumdrehungen vorhanden sind, so dass, wenn die Zähler unterschiedliche Werte anzeigen, erkennbar ist, dass einer der beiden Zähler defekt ist.

16. Messsystem nach einem der vorhergehenden Ansprüche,
**gekennzeichnet durch**
Mittel zur drahtlosen Übertragung der Umdrehungsanzahl und/oder einer Meldung der magnetischen Störung (17) zu einer Mess- und/oder Auswerteeinheit vorhanden sind.

## Claims

1. Measurement system for detecting faults in the rotary motion of a device, where the device shows at least one rotating permanent magnet (1) as well as a first and second magnetic field sensor (3, 4) offset with respect to the rotation axis (2) of the magnet and arranged with angular offset with respect to the rotation axis (2), for detecting the rotary motion of the magnet (1) and for generating at least two phase shifted sensor signals, with a device for detecting faults (12) with an evaluation circuit (14) for detecting an external magnetic fault (17) being present,
**characterized in**
**that** the evaluation circuit (14) monitors the change of the electric phase shift of the sensor signals of the first and second magnetic field sensor (3, 4) for detecting the external magnetic fault (17).

2. Measurement system according to claim 1,
**characterized in**
**that** the evaluation circuit (14) is configured in such a way that it stores a point in time and / or a time period of the magnetic fault (17).

3. Measurement system according to claim 1 or 2,
**characterized in**
a detection circuit for the direction of rotation, which is configured in such away that it detects the direction of rotation of the permanent magnet (1) from the phase position of two sensor signals, in order to determine whether the permanent magnet (1) runs forward or backward.

4. Measurement system according to any one of the preceding claims,
**characterized in**
**that** each magnetic field sensor (3, 4) comprises at least one sensor pair so that one sinusoidal signal (22, 23) each and one cosine signal (24, 25) each is generated by each magnetic field sensor (3, 4).

5. Measurement system according to any one of the preceding claims,
**characterized in**
**that** each magnetic field sensor (3, 4) is configured as a full bridge.

6. Measurement system according to any one of the preceding claims,
**characterized in**
**that** the device for detecting faults (12) and / or the detection circuit for the direction of rotation are configured in such a way that a phase position is determined on zero crossings of the sensor signals.

7. Measurement system according to any one of the preceding claims,
**characterized in**
**that** the magnetic field sensors (3, 4) are configured as magnetoresistive angle sensors.

8. Measurement system according to any one of the preceding claims,
**characterized in**
**that** the magnetic field sensors (3, 4) are configured as Hall sensors or comprise Hall sensors.

9. Measurement system according to any one of the preceding claims,
**characterized in**
a two pole magnet arrangement.

10. Measurement system according to claim 9,
**characterized in**
a circular arc shaped arrangement of the magnetic field sensors (3, 4) under an angle of 90 °.

11. Measurement system according to claim 1 to 8,
**characterized in**
a magnet arrangement with several permanent magnets and with more than two poles in a 360 ° angle.

12. Measurement system according to claim 11,
**characterized in**
a circular arc shaped magnet arrangement distributed uniformly on the circumference.

13. Measurement system according to any one of the preceding claims,
**characterized in**
**that** the evaluation circuit (14) includes a microcontroller with a software which carries out a signal evaluation of both magnetic field sensors (3, 4).

14. Measurement system according to any one of the preceding claims,
**characterized in**
a configuration of the type that the measurement of the rotational speed is still carried out, even if one of the two sensors (3, 4) has failed, with an output signal of the faultless other sensor, which is proportional to the rotations, being used for measurement of the speed.

15. Measurement system according to any one of the preceding claims,
**characterized in**
**that** two independent counters for both magnetic field sensors (3, 4) exist for measuring the measuring wheel rotations so that, if the counters show different values, it is recognizable that one of the two counters is defective.

16. Measurement system according to any one of the preceding claims,
**characterized in**
**that** means exist for wireless transmission of the number of rotations and / or a report of the magnetic fault (17) to a measuring and / or evaluation unit.

## Revendications

1. Système de mesure pour la détection d'une perturbation du mouvement de rotation d'un dispositif, dans lequel le dispositif comporte au moins un aimant permanent tournant (1), ainsi qu'un premier et un second capteur de champ magnétique (3, 4) décalés par rapport à l'axe de rotation (2) de l'aimant, ainsi que décalés angulairement par rapport à l'axe de rotation (2), qui sont destinés à détecter le mouvement de rotation de l'aimant (1) et à produire au moins deux signaux de capteurs déphasés, et dans lequel il est prévu un dispositif de détection des défaillances (12) comportant un circuit d'analyse (14) pour détecter une perturbation magnétique extérieure (17),
**caractérisé en ce que**
le circuit d'analyse (14) surveille la variation du déphasage électrique des signaux de capteurs des premier et second capteurs de champ magnétique (3, 4) .pour détecter la perturbation magnétique extérieure (17).

2. Système de mesure selon la revendication 1,
**caractérisé en ce que**
le circuit d'analyse (14) est constitué de telle manière qu'il mémorise un instant et/ou une durée de la perturbation magnétique extérieure (17).

3. Système de mesure selon la revendication 1 ou 2,
**caractérisé par**
un circuit de détection du sens de rotation qui est constitué de telle manière qu'il constate, sur la base de la position de phase de deux signaux de capteurs, le sens de rotation de l'aimant permanent (1) pour déterminer si l'aimant permanent (1) tourne vers avant ou vers l'arrière.

4. Système de mesure selon l'une des revendications précédentes,
**caractérisé en ce que**
chaque capteur de champ magnétique (3, 4) comprend au moins une paire de capteurs, de sorte qu'un signal sinusoïdal (22, 23) et un signal cosinusoïdal (24, 25) sont produits par chaque capteur de champ magnétique (3, 4).

5. Système de mesure selon l'une des revendications précédentes,
**caractérisé en ce que**
chaque capteur de champ magnétique (3, 4) est constitué par un pont complet.

6. Système de mesure selon l'une des revendications précédentes,
**caractérisé en ce que**
le dispositif de détection de perturbation (12) et/ou le circuit de détection du sens de rotation sont constitués de telle manière qu'une position de phase est déterminée à des passages par zéro des signaux de capteurs.

7. Système de mesure selon l'une des revendications précédentes,
**caractérisé en ce que**
les capteurs de champ magnétique (3, 4) sont constitués par des capteurs d'angle magnétorésistifs.

8. Système de mesure selon l'une des revendications précédentes,
**caractérisé en ce que**
les capteurs de champ magnétique (3, 4) sont constitués par des capteurs à effet Hall ou comprennent des capteurs à effet Hall.

9. Système de mesure selon l'une des revendications précédentes,
**caractérisé par**
un dispositif magnétique bipolaire.

10. Système de mesure selon la revendication 9,
**caractérisé par**
une disposition en arc de cercle des capteurs de champ magnétique (3, 4) sous un angle de 90°.

11. Système de mesure selon l'une des revendications 1 à 8,
**caractérisé par**
une disposition des aimants comportant plusieurs aimants permanents et plus de deux pôles dans l'angle de 360°.

12. Système de mesure selon la revendication 11,
**caractérisé par**
une disposition des aimants en arc de cercle, répartie uniformément sur la circonférence.

13. Système de mesure selon l'une des revendications précédentes,
**caractérisé en ce que**
le circuit d'analyse (14) comprend un microcontrôleur comportant un logiciel qui exécute une analyse des signaux des deux capteurs de champ magnétique (3, 4).

14. Système de mesure selon l'une des revendications précédentes,
**caractérisé par**
une constitution telle que la mesure du nombre de tours est encore produite même en cas de défaillance d'un des deux capteurs (3, 4), un signal de sortie de l'autre capteur, resté intact, qui est proportionnel au nombre de tours, étant utilisé pour la mesure de la vitesse du nombre de tours.

15. Système de mesure selon l'une des revendications précédentes,
**caractérisé en ce que**
deux compteurs indépendants pour les deux capteurs de champ magnétique (3, 4) sont prévus pour la mesure des tours de la roue de mesure, de sorte que, lorsque les compteurs indiquent des valeurs différentes, il est possible de savoir si un des deux compteurs est défectueux.

16. Système de mesure selon l'une des revendications précédentes,
**caractérisé en ce que**
des moyens sont prévus pour la transmission sans fil du nombre de tours et/ou d'une notification de la défaillance magnétique (17) à une unité de mesure et/ou d'analyse.
